# EUROPÄISCHE PATENTANMELDUNG

(11) **EP 0 889 079 A2**
(43) Veröffentlichungstag der Anmeldung: **07.01.1999**
(21) Anmeldenummer: 98111405.1
(22) Anmeldetag: 20.06.1998
(51) Int. Cl.: C08J 7/12

(54) **Verfahren zur Oberflächenbehandlung makromolekularer Verbindungen**

(30) Priorität: 30.06.1997 DE 19727783
(71) Anmelder: ROBERT BOSCH GMBH, 70442 Stuttgart (DE)
(72) Erfinder: Hofsaess, Volker, 71696 Moeglingen (DE); Hackenberg, Juergen, 74343 Sachsenheim (DE)

(57) **Zusammenfassung**

Es wird ein Verfahren zur Oberflächenbehandlung und Modifizierung makromolekularer Verbindungen insbesondere von makromolekularen Verbindungen mit ungesättigten Bindungen vorgeschlagen, welches in der Plasmaphase erfolgt, die Interhalogenverbindungen enthält, so daß die Doppelbindungen der makromolekularen Verbindung halogeniert werden, und dadurch verbesserte Oberflächeneigenschaften, insbesondere verbesserte Reibeigenschaften aufweisen.

## Beschreibung

### Stand der Technik

Die Erfindung betrifft ein Verfahren zur Oberflächenbehandlung makromolekularer Verbindungen, insbesondere von makromolekularen Verbindungen mit ungesättigten Bindungen mittels eines Gases oder einer Mischung von Gasen gemäß der Gattung des Hauptanspruches.

Es ist bekannt, Gase oder Gasmischungen welche elektrisch geladene Teilchen enthalten, allgemein als Plasmen oder Plasma bezeichnet, in der Materialtechnologie zu verwenden. Funktionale Kernbereiche der sogenannten Plasmatechnologie bilden subtraktive Verfahren, d.h. beispielsweise Reinigen, Ätzen, Strukturieren, und additive Verfahren, beispielsweise Abscheidung dünner Schichten, sowie Materialmodifikationen, wie Variation der freien Oberflächenenergie, Funktionalisierung, Biokompatibilität, Korrosion etc. Diese Palette von Optionen ermöglicht in vielen Fällen gegenüber konventionell hergestellten Produkten eine beträchtliche Verbesserung der Qualität. Darüberhinaus sind durch die Plasmatechnologie Materialeigenschaften einstellbar, die auf andere Weise nicht zugänglich sind. Weitere wichtige Anwendungen von Plasmen sind beispielsweise die Verwendung von Plasma zur Anregung plasmachemischer Volumenprozesse, beispielsweise in der Abgaszersetzung oder zur Synthese von Nanopulvern, und Plasma zur Oberflächenbearbeitung, beispielsweise Beschichtungen mit Plasmen, Ätzen von Mikrostrukturen etc. Besondere in der Oberflächentechnik haben Plasmen in den letzten Jahren eine ständig zunehmende Bedeutung erlangt. Dabei werden hauptsächlich Niederdruckplasmen, in einigen Fällen auch Niedertemperaturplasmen, unter Atmosphärendruck eingesetzt. Die Generierung der Plasmen erfolgt im allgemeinen durch Hochfrequenzanregung oder durch Mikrowellenanregung. Insbesondere im Bereich der Kunststoffbearbeitung hat die Verwendung von Plasmen eine große Verbreitung erlangt, da eine relativ niedrige Temperatur von meist weniger als 100° C verwendet wird, was die Erwärmung der zu behandelnden Teile bei den üblichen Prozeßzeiten auf wenige Grad Celsius begrenzte Daher ist auch der Begriff Niedertemperaturplasma gebräuchlich. Im Falle des Abschaltens des Plasmas bzw. des Abschaltens des plasmaerzeugenden elektrischen Feldes, geht die Zahl der chemisch aktiven Radikale und Ionen innerhalb von Bruchteilen einer Sekunde auf nahezu 0 zurück. Aus diesem Grunde wird im Zusammenhang mit Plasmen gelegentlich der Begriff 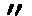 Abschaltbare Chemie" verwendet. Es ist insbesondere bekannt, Polymeroberflächen mittels Sauerstoffplasmen zu modifizieren, um deren Adhäsionseigenschaften zu verbessern. Dies ist beispielsweise in der Veröffentlichung von F.D.Egitto und L.J. Matienzo in: IBM J. Res. Develop. 1994, 38, S. 423-439 beschrieben, bei dem verschiedene Kunststoffe und Polymere mit Sauerstoffplasmen behandelt werden, wobei durch die Wechselwirkung eines sauerstoffhaltigen Plasmas mit der Kunststoffoberfläche der Einbau von Sauerstoffatomen in die obersten atomaren Lagen des Kunststoffes erfolgt. Durch den Einbau von Sauerstoff entstehen an der Oberfläche chemische Verbindungen, die eine vom reinen Kunststoff abweichende Polaritat und Oberflächenenergie aufweisen. Dadurch wird die Benetzung der Kunststoffoberfläche durch Lacke oder ähnliches, die eine durch ihre Zusammensetzung vorgegebene Oberflächenspannung besitzen, ermöglicht.

Ein bislang nur unbefriedigend gelöstes Problem besteht bei der Oberflächenbehandlung von vulkanisierten Elastomeren. Diese Elastomere werden beispielsweise als Dichtmaterial oder als Wischgummis verwendet, so daß sie einer großen physikalischen und chemischen Beanspruchung ausgesetzt sind. Die Bandbreite der angewandten Verfahren reicht von einfacher Reinigung mit Lösungsmitteln und mechanisch-abrasiver Behandlung bis hin zu chemischen Oberflächenreaktionen. Die Modifizierung von vulkanisierten Elastomeren verfolgt verschiedene Zielsetzungen, insbesondere die Verbesserung der Gleitreibungseigenschaften ohne negative Beeinflussung anderer physikalischer und chemischer Eigenschaften und die Verringerung von Öl oder Kondensatablagerungen oder deren Aufnahme. Es ist bekannt, die in den vulkanisierten Elastomeren vorhandenen Doppelbindungen zu halogenieren. Dabei werden unterschiedliche Verfahren eingesetzt, wie Behandlung mit wäßrigen Hypohalogenitlösungen oder mit gasförmigen Halogenen. Hierbei hat sich insbesondere erwiesen, daß die Behandlung mit wäßrigen Hypohalogenitlösungen im allgemeinen zu einer Verschlechterung physikalischer oder chemischer Eigenschaften wie Ermüdungsdauer, Verschleiß und Ozonbeständigkeit führt. Zudem ist die Reproduzierbarkeit des Halogenierungsgrades eingeschränkt. Diese Verfahren können außerdem nur bei Polymeren mit einem sehr hohen Anteil an Doppelbindungen eingesetzt werden, wie beispielsweise Kautschuk. Andere makromolekulare Verbindungen lassen sich mit diesem Verfahren schlecht oder nicht wirksam halogenieren.

### Vorteile der Erfindung

Das erfindungsgemäße Verfahren zur Oberflächenbehandlung von makromolekularen Verbindungen mittels eines Gases oder einer Mischung von Gasen, die elektrisch geladene Teilchen und Interhalogenverbindungen enthalten, bietet den Vorteil, daß nach diesen Verfahren behandelte makromolekulare Verbindungen unterschiedlichsten Typs, insbesondere vulkanisierte Elastomere, sehr geringe Reibwerte µ^{t} im Bereich von 0,9 bis 1,5 aufweisen. Die Oberfläche zeigt nach REM-Untersuchungen je nach Prozeßbedingung im Gegensatz zu chlorierten Elastomeren keine bzw. kaum Rißbildung. Bei vorchlorierten Elastomeren (CR) kann ein Verschließen von Oberflächenrissen beobachtet werden. Darüber hinaus lassen sich unterschiedlichste makromolekulare Verbindungen, beispielsweise NBR, CR, (EPDM+NBR), wirkungsvoll und überraschend effizient behandeln, die hinterher sämtlich eine deutliche Verbesserung der Gleitreibungseigenschaften aufweisen. Die Verwendung von hoch reaktiven, weil hoch dissoziativen Interhalogenen erleichtert das Einbringen derselben in die Plasmaphase gegenüber beispielsweise reinen Halogenen, die oft eine geringere Dissoziationsneigung aufweisen.

Weiter vorteilhafte Ausgestaltungen und Weiterbildungen des erfindungsgemäßen Verfahrens sind in den Unteransprüchen ausgeführt.

In bevorzugter Ausführung liegt das Gas oder die Gasmischung in der Plasmaphase vor, in besonders bevorzugter Weise im Nieder- oder Normaldruckbereich, so daß kein Überschuß an Halogenierungsmittel notwendig ist. Die eingesetzte Stoffmenge reagiert durch geeignete und gezielte Verfahrensführung vollständig mit der Oberfläche des Makromoleküls. Bei einem abgeschlossenen Vakuumprozeß wie er für Plasmaprozesse notwendig ist, fallen im Niederdruckbereich keine bzw. geringste Gefahrstoffmengen als Abfall an, so daß das erfindungsgemäße Verfahren darüber hinaus besonders umweltfreundlich ist.

Es bietet sich weiterhin der Vorteil, daß für das vulkanisierte Elastomer bzw. das Makromolekül nur eine relativ niedrige Bearbeitungstemperatur durch Einsatz eines Plasmas notwendig ist, so daß die thermisch induzierte Veränderung des Polymers bzw. des Makromoleküls nahezu ausgeschlossen wird. Dies wird insbesondere durch die Verwendung von Niedertemperatur-Plasma, auch kaltes Plasma genannt, erreicht.

In bevorzugter Ausführung werden Interhalogenverbindungen verwendet, die eine hohe Dissoziationsneigung und eine hohe Reaktionsfähigkeit aufweisen. Jene nimmt mit zunehmender Massenzahl der Halogene im Periodensystem also in Richtung von oben nach unten zu, diese folgt dem umgekehrten Trend, so daß Verbindungen bestehend aus einem Schweren und einem leichten Halogen am reaktivsten sind. Die Reaktivität des Plasmas wird entscheidend gesteigert und eine quantitative Abreaktion mit den Doppelbindungen des Elastomers kann erreicht werden.

### Beschreibung des Ausführungsbeispiels

Im nachfolgenden wird das erfindungsgemäße Verfahren anhand eines Ausführungsbeispiels erläutert.

Es ist vorgesehen, die Interhalogenverbindungen in situ in der Reaktionskammer zu erzeugen, oder aber die stabilen festen oder flüssigen Interhalogene, beispielsweise BrF₅, IF₅, IF₃ oder ICl bzw. IBr in der Kammer zu deponieren. Es kann dem Halogenierungsprozeß im Niederdruckplasma auch eine Vorbehandlung mit einem reinem Sauerstoffplasma oder einem Sauerstoff-Edelgasplasma vorangestellt werden.

Ein vulkanisiertes Elastomer, beispielsweise ein Wischgummi, bestehend beispielsweise aus NBR oder CR wird direkt nach der Herstellung im Extruder oder im Spritzguß folgenden Reaktionsschritten des erfindungsgemäßen Verfahren ausgesetzt:
1. Vorbehandlung im O₂-Plasma
   Die Anregungsfrequenz beträgt 40 kHz, die Anregungsleistung 250 Watt. Der Wischgummi wird in die Vakuumkammer eingebracht, der Prozeßdruck auf 1,0 mbar gebracht und während zwölf Minuten Prozeßdauer der Wischgummi im reinen Sauerstoffplasma behandelt.
2. Halogenierung mit Jodbromid
   Nach der Vorbehandlung erfolgt die Halogenierung mittels einer Interhalogenverbindung, wobei ungefähr 1 mMol IBr je m² Elastomeroberfläche eingesetzt wird. Die Anregungsfrequenz dieses Plasmas beträgt 40 kHz und die Anregungsleistung 250 Watt. Der Prozeßdruck beträgt 1 mbar bis 4 mbar, die Prozeßdauer des Halogenierungsprozesses 12 Minuten.

Selbstverständlich ist dieser Prozess auch ohne Vorbehandlung mittels eines Sauerstoffplasmas ebenso erfolgreich durchführbar.

Dieses Niederdruckplasmaverfahren (Drehtrommel) wird in einer Vakuumkammer durchgeführt. Nach Erreichen des Basisdruckes von einigen mbar wird das Prozeßgas eingeleitet und die Hochfrequenzanregung gestartet. Gase werden über Massenflußregler, Feststoffe wie Jod oder Jodbromid über eine Schleuse in die Prozeßkammer eingebracht. Nach dem Vorbehandlungs- bzw. dem Halogenierungsprozeß wird die Kammer mit einem Spülgas, typischerweise Luft, geflutet. Selbstverständlich ist es ebenso möglich die Plasmaanregung mittels Mikrowellen durchzuführen.

Eine weitere Prozeßoptimierung kann durch eine höhere Abpumpleistung und daraus resultierender, deutlich verkürzter Verfahrensdauer erreicht werden. Eine Verkürzung der Plasmaprozeßdauer ist durch einen größeren Ionisierungsgrad über die Erhöhung der Anregungsfrequenz möglich.

## Patentansprüche

1. Verfahren zur Oberflächenbehandlung makromolekularer Verbindungen, insbesondere von makromolekularen Verbindungen mit ungesättigten Bindungen, mittels eines Gases oder einer Mischung von Gasen, welche elektrisch geladenen Teilchen enthalten, dadurch gekennzeichnet, daß in dem Gas oder Gasmischung mindestens eine Interhalogenverbindung vorhanden ist.

2. Verfahren nach Anspruch 1, dadurch gekennzeichnet, daß das Gas oder die Gasmischung in der Plasmaphase vorliegen.

3. Verfahren nach Anspruch 1 und 2, dadurch gekennzeichnet, daß das Plasma im Nieder- und/oder Normaldruckbereich generiert wird.

4. Verfahren nach Anspruch 1 und 2, dadurch gekennzeichnet, daß das Plasma durch Hochfrequenzanregung generiert wird.

5. Verfahren nach Anspruch 1 und 2, dadurch gekennzeichnet, daß das Plasma durch Mikrowellenanregung generiert wird.

6. Verfahren nach Anspruch 1 und 2, dadurch gekennzeichnet, daß das Plasma durch UV-Strahlung generiert wird.

7. Verfahren nach Anspruch 1 und 2, dadurch gekennzeichnet, daß vor der Behandlung mit Interhalogenverbindungen eine Plasmavorbehandlung der makromolekularen Verbindungen mittels eines Sauerstoffplasmas oder eines Sauerstoff-Edelgas-Plasmas erfolgt.

8. Verfahren nach Anspruch 1, dadurch gekennzeichnet, daß die Interhalogenverbindungen die allgemeine Summenformel XY besitzen, wobei X für Fluor, Chlor, Brom und Jod steht, Y für Fluor, Chlor, Brom und Jod steht und X von Y verschieden ist.

9. Verfahren nach Anspruch 1, dadurch gekennzeichnet, daß die Interhalogenverbindungen die allgemeine Summenformel XYₙ besitzen, wobei n für die ganzen Zahlen 3 und 5 steht, X für Chlor, Brom und Jod steht und Y Fluor bedeutet.

10. Verfahren nach Anspruch 1, dadurch gekennzeichnet, daß die Interhalogenverbindungen die allgemeine Summenformel XY₇ besitzen, wobei X für Jod und Y für Fluor steht.

11. Verwendung von mit Interhalogenverbindungen vorbehandelten makromolekularen Verbindungen, insbesondere von Elastomeren, als Wischgummis von Scheibenwischern.
